# EUROPEAN PATENT APPLICATION

(11) **EP 0 889 263 A1**
(43) Date of publication of application: **07.01.1999**
(21) Application number: 98112073.6
(22) Date of filing: 30.06.1998
(51) Int. Cl.: F16H 61/02, F16H 59/50

(54) **Control system for automatic transmission installed in motor vehicle equipped with drive road wheel lock detecting system**

(30) Priority: 01.07.1997 JP 175761/97
(71) Applicant: NISSAN MOTOR COMPANY, LIMITED, Yokohama-shi, Kanagawa 221-0023 (JP)
(72) Inventor: Ochiai, Tatsuo, Chigasaki-shi, Kanagawa 253-0061 (JP); Ozaki, Yuji, Zama-shi, Kanagawa 228-0024 (JP); Shimanaka, Shigeki, Hadano-shi, Kanagawa 257-0003 (JP)
(74) Representative: Grünecker, Kinkeldey, Stockmair & Schwanhäusser Anwaltssozietät

(57) **Abstract**

A wheeled motor vehicle is equipped with an engine, an automatic transmission, at least one drive road wheel driven by the engine through the transmission. A control system comprises a first device for detecting a locked condition of the drive road wheel which is caused by engine brake, and a second device for shifting up the transmission to reduce a transmission ratio thereof when actuated due to detection of the locked condition of the drive road wheel by the first device. The first device may be a road wheel lock detecting system employed in a known anti-lock brake system.

## Description

The contents of Japanese Patent Application 9-175761 filed July 1, 1997 are hereby incorporated by reference.

### BACKGROUND OF THE INVENTION

### 1. Field of the Invention

The present invention relates in general to a control system for controlling an automotive automatic transmission, and more particularly to a control system for an automatic transmission installed in a motor vehicle which is equipped with a drive wheel lock detecting system for detecting a locked condition of drive wheels.

### 2. Description of the Prior Art

For clarifying the task of the present invention, one control system of the above-mentioned type will be briefly described, which is disclosed in Japanese Patent First Provisional Publication 62-187643. That is, this known control system controls an automatic transmission installed in a motor vehicle which is equipped with an anti-lock brake system.

In the known control system, when, due to hard depression of a brake pedal, the anti-lock brake system starts to operate, the automatic transmission is up-shifted, that is, shifted up to a gear position of lower transmission ratio. With this up-shifting, the anti-lock brake system becomes to have a higher responsibility in controlling the braking force and thus the running stability of the vehicle is kept.

### SUMMARY OF THE INVENTION

However, even the above-mentioned control system fails to satisfy users particularly when drive wheels undergo a locked condition during running of the vehicle, due to engine brake or the like. That is, when, during cruising of the vehicle, the transmission is shifted down from a higher speed gear (viz., lower transmission ratio) to a lower speed gear (viz., higher transmission ratio) and/or when, during running of the vehicle with the lower speed gear, an accelerator pedal is released, a marked engine brake is generated causing locked condition of the drive wheels. However, in the above-mentioned known control system, up-shifting of the transmission is not carried out in this locked condition. In other words, in the known control system, up-shifting of the transmission is effected only when the anti-lock brake system is actuated upon depression of the brake pedal.

It is therefore an object of the present invention to provide a control system for an automatic transmission installed in a motor vehicle equipped with a drive wheel lock detecting system for detecting a locked condition of drive wheels, which can induce up-shifting of the transmission when the drive wheel lock detecting system detects the locked condition of the drive wheels.

According to the present invention, there is provided a control system for an automatic transmission installed in a motor vehicle equipped with a detecting system for detecting a locked condition of drive wheels, which can induce up-shifting of the transmission when the drive wheels undergo locked condition because, for example, during cruising of the vehicle, the transmission is shifted down from a higher speed gear to a lower speed gear and/or, during running of the vehicle with the lower speed gear, a throttle valve opening is decreased due to releasement of an accelerator pedal or the like.

### BRIEF DESCRIPTION OF THE DRAWINGS

Fig. 1 is a block diagram of a control system of the present invention; and
Fig. 2 is a flowchart showing programmed operation steps executed by a control unit employed in the control system of the invention.

### DETAILED DESCRIPTION OF THE INVENTION

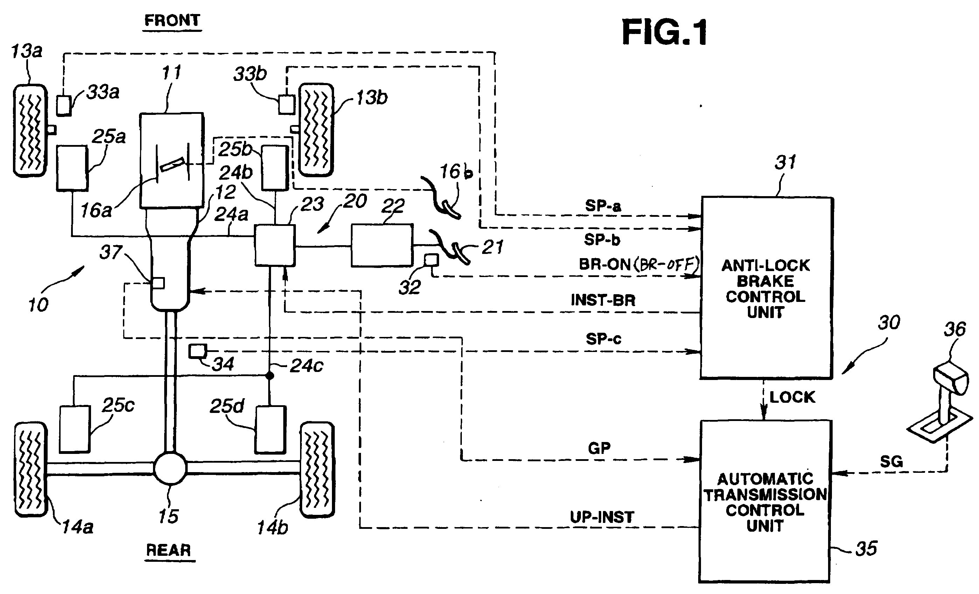

Referring to Fig. 1, there is schematically shown essential devices and parts of a wheeled motor vehicle, to which the present invention is practically applied.

In Fig. 1, denoted by numerals 10, 20 and 30 are respectively a driving section, a braking section and a control section, which are installed in the vehicle.

The driving section 10 comprises generally an engine 11, an automatic transmission 12, left and right front non-drive wheels 13a and 13b, left and right rear drive wheels 14a and 14b and a rear wheel differential gear 15. The engine 11 has in its intake system a throttle valve 16a which is controlled by an accelerator pedal 16b actuated by a driver. As shown, the rear drive wheels 14a and 14b are driven by the engine 11 through the transmission 12. The transmission 12 is of a known type generally comprising a torque converter and planetary gear units.

The braking section 20 comprises generally a brake pedal 21 actuated by the driver, a hydraulic master cylinder 22 actuated by the brake pedal 21, an electric actuator 23, brake cylinders 25a, 25b, 25c and 25d for the wheels 13a, 13b, 14a and 14b, and connecting pipes 24a, 24b and 24c for connecting the actuator 23 with the brake cylinders 25a, 25b, 25c and 25d in the illustrated manner.

The control section 30 comprises generally an anti-lock brake control unit 31, a brake switch 32 controlled by the brake pedal 21, rotation speed sensors 33a and 33b for the left and right front non-drive wheels 13a and 13b, a rotation speed sensor 34 for the rear drive wheels 14a and 14b, an automatic transmission control unit 35, a shift lever 36 and a gear position sensor 37 Installed in the transmission.

The driving section 10, the braking section 20 and the control section 30 and their mutual connection will be well understood when taken in conjunction with the disclosure of US Patent 5, 117, 934 titled "SLIP CONTROL SYSTEM FOR VEHICLE AND ROUGH ROAD DETECTING SYSTEM" issued on June 2, 1992.

During running of the vehicle, the rotation speed sensors 33a, 33b and 34 issue rotation speed signals "SP-a", "SP-b" and "SP-c" representing the rotation speeds of the corresponding wheels 13a, 13b and 14a (or 14b). When a driver depresses the brake pedal 21, the brake switch 32 issues a brake-ON signal "BR-ON" representing depression of the brake pedal 21. While, the driver releases the brake pedal 21, the brake switch 32 issues a brake-OFF signal "BR-OFF" representing non-depression of the brake pedal 21. These signals "SP-a", "SP-b", "SP-c", "BR-ON" and "BR-OFF" are inputted to the anti-lock brake control unit 31. By processing these signals with respect to a time, the control unit 31 judges and determines a locked condition of each wheel 13a, 13b, 14a or 14b and feeds the electric actuator 23 with instruction signals "INST-BR" to control the hydraulic pressure fed to each brake cylinder 25a, 25b, 25c or 25d. With this, undesired lock of the wheels 13a, 13b, 14a and 14b upon hard depression of the brake pedal 21 is suppressed or minimized.

As for the gear change operation of the automatic transmission 12, when, during cruising of the vehicle, the shift lever 36 is moved to a new position thereby feeding a selected gear signal "SG" to the automatic transmission control unit 35, the unit 35 feeds the transmission 12 with a corresponding instruction signal to allow the same to carry out up-shifting or down-shifting with reference to a running condition of the vehicle.

In this embodiment, up-shifting of the transmission 12 is effected not only when the anti-lock brake system is actuated upon depression of the brake pedal 21, but also when the rear drive wheels 14a and 14b undergo a locked condition due to reasons other than the brake depression, that is, due to engine braking caused by a shift down operation and/or decreasing of the throttle valve opening.

That is, when during cruising of the vehicle the transmission 12 is shifted down from a higher speed gear (viz., lower transmission ratio) to a lower speed gear (viz., higher transmission ratio) and/or when during running with the lower speed gear an accelerator pedal 16b is released, a marked engine brake is generated thereby increasing a possibility of locked condition of the rear drive wheels 14a and 14b.

By processing rotation speed signal "SP-c" issued from the rotation speed sensor 34, the anti-lock brake control unit 31 judges and determines a locked condition of the rear drive wheels 14a and 14b and feeds the automatic transmission control unit 35 with a lock signal "LOCK" representing locked condition of the rear drive wheels 14a and 14b. It is now to be noted that since, in this case, the brake pedal 21 is not depressed, the anti-lock brake control unit 31 does not feed the electric actuator 23 with instruction signals, and thus the anti-lock brake system does not operate.

Upon receiving and processing the lock signal "LOCK" from the anti-lock brake control unit 31 and a gear position signal "GP" from the gear position sensor 37, the automatic transmission control unit 35 feeds the transmission 12 with an up-instruction signal "UP-INST" to force the transmission 12 to carry out an up-shifting.

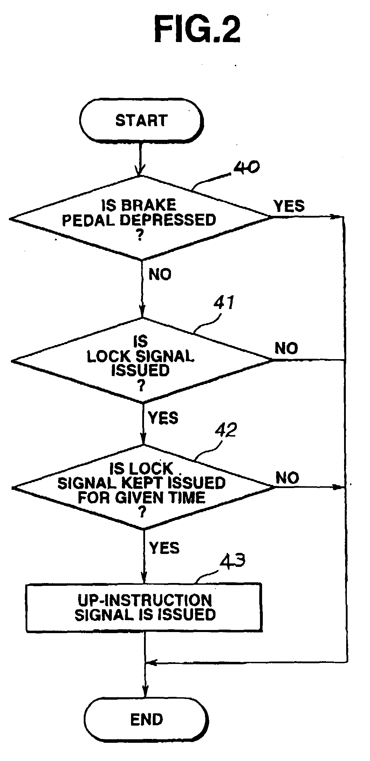

Programmed operation steps executed by the automatic transmission control unit 35 will be described with reference to the flowchart of Fig. 2.

At step 40, judgment is carried out as to whether the brake pedal 21 is depressed or not. If YES, that is, when the brake pedal 21 is depressed, the operation ends. While, if NO, that is, when the brake pedal 21 is not depressed, the operation flow goes to step 41. At step 41, judgement is carried out as to whether the lock signal "LOCK" is issued from the anti-lock brake control unit 31 or not. If YES, that is, when "LOCK" signal is issued, the operation flow goes to step 42. If NO at step 41, the operation ends. At step 42, judgement is carried out as to whether the lock signal "LOCK" is continuously issued for a given time or not. If YES, that is, when the lock signal "LOCK" is continuously issued for the given time, the operation flow goes to step 43, judging that the rear drive wheels 14a and 14b have undergone a locked condition. If NO at step 42, the operation ends. At step 43, the above-mentioned up-instruction signal "UP-INST" is led to the transmission 12 to force the transmission 12 to carry out an up-shifting.

The given time at step 42 should be no longer than 1 seconds, preferably from approximately 50 milliseconds to approximately 100 milliseconds. With this very short time, after occurrence of locked condition of the drive wheels 14a and 14b, up-shifting of the transmission 12 is instantly carried out, which assures keeping of the running stability of the vehicle.

If desired, the following modifications may be adopted in the above-mentioned embodiment.

That is, the anti-lock brake control unit 31 and the automatic transmission control unit 35 may be united as a single control unit. Furthermore, if desired, the automatic transmission 12 may be of a continuously variable type, such as V-belt type continuously variable transmission, toroidal type continuously variable transmission or the like.

As will be understood from the foregoing description, the present invention will be summarized in the following.

That is, according to a first aspect of the invention, there is provided a control system for an automatic transmission installed in a motor vehicle equipped with an engine and at least one drive wheel driven by the engine through the transmission. The control system comprises first means which detects a locked condition of the drive wheel which is caused by engine brake, and second means which shifts up the transmission to reduce a transmission ratio thereof when actuated due to detection of the drive wheel locked condition by the first means.

According to a second aspect of the invention, there is provided a control system for an automatic transmission installed in a motor vehicle. The motor vehicle is equipped with an engine and at least one drive road wheel driven by the engine through the transmission. The engine is capable of generating engine brake force when the transmission is shifted down and/or a throttle valve opening is decreased. The control system for the automatic transmission comprises a wheel lock detector for detecting a locked condition of the drive road wheel which is caused by generation of the engine brake force; and a transmission ratio changer for shifting up the transmission when the locked condition of the drive road wheel is detected by the wheel lock detector.

## Claims

1. In a motor vehicle which is equipped with an engine, an automatic transmission and at least one drive road wheel driven by said engine through the transmission,
a control system for the automatic transmission comprising:
first means for detecting a locked condition of the drive road wheel which is caused by engine brake; and
second means for shifting up the transmission to reduce a transmission ratio thereof when actuated due to detection of the locked condition of the drive road wheel by said first means.

2. A control system as claimed in Claim 1, in which said first means comprises:
a rotation speed sensor for sensing the rotation speed of the drive road wheel, the rotation speed sensed by said sensor being used for detecting the locked condition of the drive road wheel;
a brake operation detector for detecting whether a brake pedal of the vehicle is depressed or not; and
a controller for issuing a wheel lock representing signal to actuate said second means when said rotation speed sensor senses the locked condition of the drive road wheel and said brake operation detector detects non-depression of the brake pedal.

3. A control system as claimed in Claim 2, in which said second means shifts up said transmission when said wheel lock representing signal is kept issued for a predetermined time.

4. A control system as claimed in Claim 3, in which said predetermined time is no longer than 1 seconds.

5. In a motor vehicle which is equipped with an engine, an automatic transmission and at least one drive road wheel driven by said engine through said transmission, said engine being capable of generating engine brake force when the transmission is shifted down and/or a throttle valve opening is decreased,
a control system for the automatic transmission comprising:
a wheel lock detector for detecting a locked condition of the drive road wheel which is caused by generation of said engine brake force; and
a transmission ratio changer for shifting up the transmission when the locked condition of the drive road wheel is detected by said wheel lock detector.

6. A control system as claimed in Claim 5, in which said wheel lock detector comprises:
a rotation speed sensor for sensing the rotation speed of the drive road wheel, the rotation speed sensed by said sensor being used for detecting the locked condition of the drive road wheel;
a brake switch for detecting whether a brake pedal of the vehicle is depressed or not; and
a controller for issuing a wheel lock representing signal to actuate said transmission ratio changer when said rotation speed sensor senses the locked condition of the drive road wheel and inhibiting the actuation of said transmission ration changer when said brake switch detects the depression of the brake pedal.
